# EUROPÄISCHE PATENTANMELDUNG

(11) **EP 4 417 846 A1**
(43) Veröffentlichungstag der Anmeldung: **21.08.2024**
(21) Anmeldenummer: 24158736.9
(22) Anmeldetag: 20.02.2024
(51) Int. Cl.: F16L 5/12, F16L 5/14, F16L 59/12, H02G 3/22, F24F 1/32

(54) **WÄRMEÜBERTRAGER-WANDDURCHFÜHRUNG FÜR WÄRMEÜBERTRAGER-SYSTEME, VERSCHLUSSEINHEIT UND WÄRMEÜBERTRAGER-SYSTEM MIT SELBIGER**

(30) Priorität: 20.02.2023 EP 23157633
(71) Anmelder: DOYMA GmbH & Co, 28876 Oyten (DE)
(72) Erfinder: Straube, Florian, 28359 Bremen (DE)
(74) Vertreter: Eisenführ Speiser

(57) **Zusammenfassung**

Die Erfindung betrifft eine Wärmeübertrager-Wanddurchführung (100) zur oberirdischen Installation eines Wärmeübertrager-Systems mit mehreren wärmeführenden Fluidleitungen (101), wobei die Wanddurchführung (100) zum Durchführen der Fluidleitungen (101) durch eine Öffnung eines Wandabschnitts eingerichtet ist. Es wird vorgeschlagen, dass die Wanddurchführung (100) eine (erste) Verschlusseinheit (1), die zur Anlage an dem Wandabschnitt eingerichtet ist, und mehrere in die Öffnung einführbare Rohrstutzen (7,9) zur Aufnahme der Fluidleitungen aufweist, und eine Positioniereinheit bzw. (zweite) Verschlusseinheit (1') aufweist, die zur Anlage an oder in dem Wandabschnitt, der ersten Verschlusseinheit (1) gegenüber, eingerichtet ist, und einen oder mehrere in die Öffnung einführbare Rohrstutzen (7,9) zur Aufnahme der Fluidleitungen aufweist, wobei die Rohrstutzen (7,9) der ersten und zweiten Verschlusseinheit (1,1') dazu eingerichtet sind, verschieblich mit den Rohrstutzen (9,7) der jeweils anderen Verschlusseinheit (1', 1) zusammengesteckt zu werden.

## Beschreibung

Die vorliegende Erfindung betrifft eine Wärmeübertrager-Wanddurchführung zur oberirdischen Installation eines Wärmeübertrager-Systems mit mehreren wärmeführenden Fluidleitungen, wobei die Wanddurchführung zum Durchführen der Fluidleitungen durch eine Öffnung eines Wandabschnitts eingerichtet ist.

Die oberirdische Installation des Wärmeübertrager-Systems ist ein gesonderter Anwendungsfall.

Unter dem Begriff des Wärmeübertrager-Systems sind erfindungsgemäß Klimaanlagen, die im Inneren des Gebäudes eine Kühlwirkung erzeugen, und Heizanlagen, insbesondere Wärmepumpenanlagen, die im Inneren des Gebäudes eine Heizwirkung erzeugen, zu verstehen. Der Begriff Wärmeübertrager-System umfasst aber auch Nahwärme-, Fernwärme-, Erdwärme- und Solarthermie-Systeme.

Die erfindungsgemäße Wärmeübertrager-Wanddurchführung eignet sich für eine Wanddurchführung zur oberirdischen Installation eines Wärmeübertrager-Systems mit mehreren Leitungen. Die Wärmeübertrager-Wanddurchführung kann aber auch grundsätzlich für abweichende Einsatzzwecke zur Durchführung von Leitungen verwendet werden, wie beispielsweise für eine Wallbox für Elektro-Pkw, Wasserleitungen und Stromleitungen oder als Hausausführung für die Versorgung weiterer Bauten wie Swimmingpool, Gartenhäuschen, Poolbar oder Werkzeug- sowie Geräteschuppen oder dergleichen.

Im Stand der Technik ist das Verlegen von Fluidleitungen für das Wärmeübertrager-System, beispielsweise zwischen Innengerät und Außengerät, durch das Erdreich bekannt. Daneben ist aber, gerade beim Nachrüsten solcher Wärmeübertrager-Systeme an Bestandsbauten, auch das nicht bodenberührte, oberirdische Verbinden des Außengeräts mit dem Innengerät bekannt, bei dem die Fluidleitungen durch eine Außenwand eines Gebäudes hindurch verlegt werden.

Unter einem Außen- und Innengerät wird vorliegend jedes beliebige Gerät eines Wärmeübertrager-Systems verstanden, wobei eines der beiden Geräte unabhängig von seiner jeweiligen Anordnung, also ob innen oder außen, auch als Komponente ohne einen eigenen Regelkreis des jeweils anderen Geräts, das auf dem entgegengesetzten wandseitigen Bereich angeordnet ist, ausgebildet sein kann.

Es hat sich herausgestellt, dass in vielen Baustellensituationen die Fluidleitungen durch die Gebäude-Außenwand hindurchgeführt werden, wobei ein Spaltraum entsteht, und der verbliebene Spaltraum zwischen der Leitung und einer die Leitung umgebenden Wandfläche wird einfach mit geeignetem Bauschaum ausgefüllt. Solche Lösungen haben den Nachteil einer völlig unzureichenden Abdichtung gegen Umgebungseinflüsse wie Feuchtigkeit, Kälte, Lärm, UV-Strahlung etc. Zudem wird als Nachteil gesehen, dass derartige Lösungen nicht vogelpicksicher sind.

Die Installation eines Wärmeübertrager-Systems erfordert das Zusammenspiel mehrerer Gewerke am Installationsort. So wird beispielsweise die Kernbohrung durch die Gebäudewand hindurch in der Regel nicht vom selben Installateur eingebracht wie das Wärmeübertrager-System selbst.

Das Einhalten der relevanten Anforderungen und Randbedingungen, die sich aus der Gebäude- und Anlagentechnik ergeben und die üblicherweise in Lastenheften niedergeschlagen sind, können hierdurch nur erschwert erfüllt werden.

Es existieren zwar Dichtsysteme zum Einführen von medienführenden Leitungen in Gebäude hinein durch Wände hindurch. Diese sind aber bisweilen komplex aufgebaut und nur mit einem bestimmten Kostenrahmen erhältlich. Die Installation mit den bekannten Systemen ist kostenintensiv und für ungeschultes Personal bisweilen zeitintensiv sowie fehleranfällig. Für die Verwendung im Zusammenhang mit den Fluidleitungen eines Wärmeübertrager-Systems sind diese Systeme daher nicht geeignet.

Es lag demzufolge der Erfindung die Aufgabe zugrunde, eine Wanddurchführung zur oberirdischen Installation eines Wärmeübertrager-Systems anzugeben, die die vorstehend geschilderten Nachteile möglichst weitgehend überwindet. Insbesondere lag der Erfindung die Aufgabe zugrunde, eine Wärmeübertrager-Wanddurchführung anzugeben, die kostengünstig erhältlich und möglichst einfach bei geringem Zeiteinsatz zu installieren ist.

Die Erfindung löst die ihr zugrundeliegende Aufgabe bei einer Wärmeübertrager-Wanddurchführung der eingangs bezeichneten Art, indem die Wanddurchführung aufweist:
- eine Verschlusseinheit, die zur Anlage an dem Wandabschnitt eingerichtet ist, und mehrere in die Öffnung einführbare Rohrstutzen zur Aufnahme der Fluidleitungen aufweist, und
- eine Positioniereinheit, die zur Anlage an oder in dem Wandabschnitt, der ersten Verschlusseinheit gegenüber, eingerichtet ist, und mehrere in die Öffnung einführbare Rohrstutzen zur Aufnahme der Fluidleitungen aufweist, wobei die Rohrstutzen dazu eingerichtet sind, verschieblich miteinander zusammengesteckt zu werden.

Vorzugsweise ist die Verschlusseinheit eine erste Verschlusseinheit, und die Positioniereinheit ist eine zweite Verschlusseinheit, wobei die Rohrstutzen der ersten und zweiten Verschlusseinheit dazu eingerichtet sind, verschieblich mit den Rohrstutzen der jeweils anderen Verschlusseinheit zusammengesteckt zu werden.

Die Erfindung macht sich diesbezüglich die Erkenntnis zunutze, dass mit dem Ineinanderstecken der Rohrstutzen für jede der Fluidleitungen im selben Arbeitsgang ein von den Rohrstutzen gebildetes Hülsrohr bereitgestellt werden kann, welches sich von der einen Seite der Wand bis zur anderen Seite der Wand erstreckt, und innerhalb dessen die Fluidleitungen ohne jegliche Gefahr einer Fehlinstallation schnell verlegt werden können. Es müssen keine weiteren Hülsrohre oder dergleichen extra installiert werden. Ein weiterer Vorteil der erfindungsgemäßen Lösung wird darin gesehen, dass durch das verschiebliche Zusammenstecken der Rohrstutzen ineinander eine schnelle Installation an Wänden mit verschiedenen Wanddicken möglich ist, ohne dass die Verschlusseinheiten durch individuelle handwerkliche Maßnahmen, wie etwa Absägen oder Abtrennen von Bauteilen, angepasst werden müssen. Durch das verschiebliche Zusammenstecken der Rohrstutzen können immer dieselben Verschlusseinheiten ungeachtet der Wanddicke, in einem entsprechend vorbekannten Rahmen, verwendet werden.

Die Erfindung wird vorteilhaft weitergebildet, indem die (erste) Verschlusseinheit einen ersten Rohrstutzen mit einem ersten Außendurchmesser und einem ersten Innendurchmesser aufweist, und einem zweiten Rohrstutzen mit einem zweiten Außendurchmesser und einem zweiten Innendurchmesser. Der erste Innendurchmesser ist in dieser Weiterbildung größer oder gleich dem zweiten Außendurchmesser. Die Dimensionierung der Durchmesser der Rohrstutzen ist vorzugsweise so angepasst, dass beim Zusammenstecken eines zweiten Rohrstutzens in einen ersten Rohrstutzen ein radiales Bewegungsspiel in einem gewissen Rahmen möglich ist. Es sollen selbstverständlich nicht die Stutzen von ein und derselben Verschlusseinheit ineinandergesteckt werden, sondern jeweils die Rohrstutzen einer Verschlusseinheit mit den Rohrstutzen einer anderen Verschlusseinheit.

Weiter vorzugsweise ist die Wanddurchführung ferner zum Durchführen einer oder mehrerer elektrischer Leitungen, etwa Steuer- und/oder Datenleitungen, durch die Öffnung des Wandabschnitts eingerichtet, wobei die Rohrstutzen zur Aufnahme der Fluidleitungen primäre Rohrstutzen sind, und die ersten und zweiten Verschlusseinheiten jeweils einen oder mehrere in die Öffnung einführbare sekundäre Rohrstutzen zur Aufnahme der elektrischen Leitungen aufweisen, und wobei die sekundären Rohrstutzen der ersten und zweiten Verschlusseinheit dazu eingerichtet sind, mit den sekundären Rohrstutzen der jeweils anderen Verschlusseinheit verschieblich zusammengesteckt zu werden. Bezüglich der sekundären Rohrstutzen macht sich die Erfindung dieselben Erkenntnisse zunutze wie bezüglich der vorstehend beschriebenen primären Rohrstutzen, gemeinsam auch allgemein als "Rohrstutzen" bezeichnet.

Die Bezeichnung "primär" und "sekundär" ist nicht abschließend im obigen Sinne zu verstehen. Es soll unter der Bezeichnung vielmehr verstanden werden, dass in die "primären" Rohrstutzen bei entsprechender Dimensionierung auch mehrere Fluidleitungen zugleich eingeführt werden können, oder eine Kombination aus Fluidleitungen und elektrischen Leitungen. Gleichermaßen soll verstanden werden, dass in die "sekundären" Rohrstutzen bei entsprechender Dimensionierung mehrere elektrische Leitungen eingeführt werden können, oder eine Kombination aus Fluidleitungen und elektrischen Leitungen.

In einer bevorzugten Ausführungsform weist die erste Verschlusseinheit als einen der sekundären Rohrstutzen einen dritten Rohrstutzen mit einem dritten Außendurchmesser auf, und einem dritten Innendurchmesser, und als einen weiteren der sekundären Rohrstutzen einen vierten Rohrstutzen mit einem vierten Außendurchmesser und einem vierten Innendurchmesser, wobei der dritte Innendurchmesser größer oder gleich dem vierten Außendurchmesser ist. Die Funktionsweise und Dimensionierung der dritten und vierten Rohrstutzen entspricht in ihren Grundsätzen den Dimensionierungsunterschieden zwischen dem ersten und zweiten Rohrstutzen dahingehend, dass zwischen dem dritten Innendurchmesser und dem vierten Außendurchmesser vorzugsweise in radialer Richtung ein Bewegungsspiel verbleibt, das ein Verschieben der Rohrstutzen ineinander ermöglicht.

Die (primären und sekundären) Rohrstutzen der ersten Verschlusseinheit sind vorzugsweise parallel zueinander und derart relativ zu einer Symmetrieachse ausgerichtet, dass nach einer Drehung um die Symmetrieachse, vorzugsweise um 180°, jeweils die ersten und zweiten Rohrstutzen miteinander die Positionen tauschen, und die dritten und vierten Rohrstutzen ebenfalls.

Vorstehend wird vornehmlich davon ausgegangen, dass die Rohrstutzen im zusammengesteckten Zustand Leerrohre ausbilden, die ihrerseits dann Fluid- und/oder Medienleitungen aufnehmen. In einer weiteren bevorzugten Ausführungsform ist ferner vorgesehen, dass die Rohrstutzen derart dimensioniert sind, oder mit Dichtmitteln derart versehen sind, dass die Rohrstutzen im zusammengesteckten Zustand fluiddicht aneinander anliegen. Damit wird ermöglicht, dass die Rohrstutzen durch Zusammenstecken direkt Fluidleitungen ausbilden, so dass keine zusätzlichen Leitungen mehr durchgeführt werden müssen. An den Verschlusseinheiten werden dann vorzugsweise Anschlussschnittstellen für korrespondierende Leitungsverbinder vorgesehen.

In einer bevorzugten Ausführungsform sind die Rohrstutzen an der zweiten Verschlusseinheit identisch zu den Rohrstutzen der ersten Verschlusseinheit dimensioniert, ausgerichtet und beabstandet. Alternativ oder zusätzlich sind die ersten und zweite Verschlusseinheit als identische Bauteile ausgebildet. Durch die erfindungsgemäße Dimensionierung der Rohrstutzen dergestalt, dass sie ineinandergesteckt werden können, kann in bevorzugten Ausführungsformen dasselbe Bauteil als erste Verschlusseinheit wie auch als zweite Verschlusseinheit benutzt werden, was die Anzahl der herzustellenden und bereitzuhaltenden Bauteile auf ein Minimum reduziert und dazu führt, dass die Kosteneffizienz des Systems weiter gesteigert wird, ohne hierdurch Abstriche bei der Bauteilqualität in Kauf nehmen zu müssen.

In einer weiteren bevorzugten Ausführungsform weist die erste und/oder zweite Verschlusseinheit eine, vorzugsweise mittels Blinddeckel verschlossene, Einfüllöffnung zur Injektion eines Füllmaterials auf, insbesondere zur Injektion eines Schall- bzw. Schwingungs- und/oder Wärmedämmmaterials. Geeignete Materialkandidaten für Schall- und/oder Wärmedämmungsfunktionen sind beispielsweise allgemein bekannte Mehrkomponenten-Schäume.

In einer weiteren bevorzugten Ausführungsform weist die Wanddurchführung eine aus einem oder mehreren Formteilen ausgebildete Dämmung auf, vorzugsweise Schall- und/oder Wärmedämmung, die dazu eingerichtet ist, zwischen den Verschlusseinheiten positioniert zu werden, wobei die Dämmung Ausnehmungen für die Rohrstutzen aufweist, und wobei die Dimensionierung, Ausrichtung, Beabstandung und Anzahl dieser Ausnehmungen den entsprechenden Größen der Rohrstutzen entspricht. Die Wärmedämmung kann beispielsweise um die Rohrstutzen herumgelegt werden oder, wenn sie als ein einteiliger Formkörper ausgebildet ist, auf die Rohrstutzen einer Verschlusseinheit vor dem Zusammenstecken der beiden Verschlusseinheiten aufgesteckt werden.

Die Dämmung kann in ihrer Länge (in axialer Richtung, bezogen auf die Rohrstutzen) so dimensioniert sein, dass sie im Wesentlichen die gesamte Kavität im Wandabschnitt zwischen den Verschlusseinheiten einnimmt, oder nur sich nur über einen Teil der Wanddicke erstreckt. Dementsprechend kann die Dämmung in bevorzugten Ausführungsformen im installierten Zustand entweder von beiden Verschlusseinheiten beabstandet in dem Wandabschnitt angeordnet sein, oder bündig an einer oder beiden Verschlusseinheiten anliegen.

Die als Formteil, insbesondere als einteiliges Formteil, ausgebildete Dämmung kann dadurch auch als Verlängerungselement für besonders hohe Wanddicken fungieren, bei denen die beiden Rohrstutzen zwar nicht direkt ineinandergesteckt werden (können), aber jeweils von einer Seite immer noch in die Dämmung eingeschoben werden können, sodass der Spalt zwischen den beiden Verschlusseinheiten von der Wärmedämmung überbrückt wird.

Das formteilbasierte Wärmedämmmaterial ist vorzugsweise partiell oder vollständig aus Mineralwolle, Styropor (in Kugelform oder als Schalungs-/Formteil), ausgeformtes Polyurethan (PU-Schaum), Glaswolle oder Glaswolle-Schalungen oder Schaumglas-Formteile, ausgebildet, um gute Formanpassbarkeit und gleichzeitig niedrige Wärmeleitung miteinander kombinieren zu können

In einer bevorzugten Ausführungsform weist die als Formteil ausgebildete Schall- und/oder Wärmedämmung eine Umfangsfläche mit einer Längenskala und/oder mehreren Solltrennstellen auf. Dies erleichtert das Ablängen der Dämmung auf die benötigte Stärke für die jeweilige Wandstärke.

In einer weiteren bevorzugten Ausführungsform weist die erste und/oder zweite Verschlusseinheit einen Flansch, vorzugsweise umlaufend, zur Anlage an dem Wandabschnitt auf. Vorzugsweise ist an dem Flansch auf einer den Rohrstutzen der jeweils anderen Verschlusseinheit zugewandten Seite ein Dichtelement zur Abdichtung gegen den Wandabschnitt angeordnet.

Das Dichtelement ist vorzugsweise als Gummidichtung, insbesondere Zellkautschukdichtung, ausgebildet, oder als Quellband, Dickschichtkleber oder Schaumklebeband. Das Quellband ist vorzugsweise als Polyurethan-Komprimierband, Polyethylen-Rundschnur, Polyurethan-Rundschnur oder Ethylen-Propylen-DienKautschuk (EPDK)-Schaumstoffband ausgebildet. Für den Fall, dass ein solches Quellband verwendet wird, wird die Schadstoffbelastung für den Installateur reduziert und es entfällt darüber hinaus zusätzlicher Einweisungsaufwand.

In einer weiteren bevorzugten Ausführungsform sind die Rohrstutzen zumindest abschnittsweise konisch verjüngt ausgebildet. Die konische Verjüngung befindet sich insbesondere an demjenigen Ende der Rohrstutzen, das der jeweils anderen Verschlusseinheit zugewandt ist. Dies erleichtert ein Einfädeln der Rohrstutzen ineinander. Sofern nicht alle Rohrstutzen konisch verjüngt ausgebildet sind, sollten zumindest die zweiten und vierten Rohrstutzen zumindest abschnittsweise konisch verjüngt ausgebildet sein. Alternativ oder zusätzlich können die ersten und dritten Rohrstutzen am entsprechenden Ende konisch aufgeweitet sein. Die Aufweitung muss aber nicht zwingend konisch ausgebildet sein: In bevorzugten Ausführungsformen können an den Enden der Rohrstutzen, die der jeweils anderen Verschlusseinheit zugewandt sind, auch komplementäre Muffenabschnitte ausgebildet sein, damit die ersten und zweiten Rohrstutzen in vorstehend beschriebener Weise ineinandergesteckt werden können, und die dritten und vierten Rohrstutzen entsprechend.

In einer weiteren bevorzugten Ausführungsform sind die erste und zweite Verschlusseinheit mittels einer Spanneinrichtung miteinander wirkverbunden, wobei die Spanneinrichtung vorzugsweise zum axialen Verspannen der Verschlusseinheiten relativ zueinander eingerichtet ist. Das axiale Verspannen wirkt somit in Richtung der Längsachse, d. h. parallel zu der Ausrichtung der Rohrstutzen. Die Spanneinrichtung kann in allgemein bekannter Art und Weise ausgeführt sein, beispielsweise als Gewindestange mit Gewindeabschnitten in den Verschlusseinheiten. Es wird vorzugsweise eine elektrisch nichtleitende, oder nur schwach leitfähige, Gewindestange vorgesehen, um eine elektrische Trennung der Innen- und Außenbauteile voneinander zu gewährleisten. Unter nichtleitende Werkstoffe fallen Werkstoffe mit einer Leitfähigkeit von 10⁻⁸ S/cm oder geringer. Unter schwach leitenden Werkstoffen werden Werkstoffe mit einer Leitfähigkeit von 10⁴ S/cm oder geringer, aber oberhalb von 10⁻⁸ S/cm verstanden.

Die Erfindung wurde vorstehend unter Bezugnahme auf die Wanddurchführung insgesamt in einem ersten Aspekt beschrieben.

Die Erfindung betrifft in einem zweiten Aspekt ferner eine Verschlusseinheit für eine Wanddurchführung eines Wärmeübertrager-Systems mit mehreren wärmeführenden Fluidleitungen, wobei die Wanddurchführung zum Durchführen der Fluidleitungen durch eine Öffnung eines Wandabschnitts eingerichtet ist.

Die Erfindung löst die ihr zugrundeliegende Aufgabe bei einer solchen Verschlusseinheit, indem die Verschlusseinheit zur Anlage an dem Wandabschnitt eingerichtet ist, und einen oder mehrere in die Öffnung einführbare Rohrstutzen zur Aufnahme der Fluidleitungen aufweist, wobei die Rohstutzen der Verschlusseinheit dazu eingerichtet sind, mit den Rohrstutzen einer anderen Verschlusseinheit verschieblich zusammengesteckt zu werden.

Die Verschlusseinheit des zweiten Aspekts ist vorzugsweise in bevorzugten Ausführungsformen so ausgebaut wie die Verschlusseinheiten der Wanddurchführung des ersten Aspekts der Erfindung. Die Erfindung macht sich bezüglich des zweiten Aspekts dieselben Vorteile zunutze wie die Wanddurchführung des ersten Aspekts.

Bevorzugte Ausführungsformen der Wanddurchführung sind zugleich bevorzugte Ausführungsformen der Verschlusseinheit und umgekehrt, weswegen zur Vermeidung von Wiederholungen auch auf die obigen Ausführungen verwiesen wird.

Es sei gesondert darauf hingewiesen, dass die Verschlusseinheit vorzugsweise einen ersten Rohrstutzen mit einem ersten Außendurchmesser und einem ersten Innendurchmesser aufweist, und einen zweiten Rohrstutzen mit einem zweiten Außendurchmesser und einem zweiten Innendurchmesser, wobei der erste Innendurchmesser größer oder gleich dem zweiten Außendurchmesser ist.

Die Verschlusseinheit ist insbesondere dazu eingerichtet, in einer Wanddurchführung der vorstehend beschriebenen bevorzugten Ausführungsform verwendet zu werden, wobei auch eingeschlossen ist, dass solche Ausführungsformen zum Zuge kommen, bei denen die Wanddurchführung ferner zum Durchführen einer oder mehrerer elektrischer Leitungen, etwa Steuer- und/oder Datenleitungen, durch die Öffnung des Wandabschnitts eingerichtet ist. Die Rohrstutzen der Verschlusseinheit, die vorstehend zur Aufnahme der Fluidleitungen eingeführt wurden, sind dabei primäre Rohrstutzen, und die Verschlusseinheit weist ferner einen oder mehrere in die Öffnung einführbare sekundäre Rohrstutzen zur Aufnahme der elektrischen Leitung(en) auf, wobei die sekundären Rohrstutzen der Verschlusseinheit dazu eingerichtet sind, mit den sekundären Rohrstutzen der jeweils anderen Verschlusseinheit verschieblich zusammengesteckt zu werden.

Die Verschlusseinheit des zweiten Aspekts weist vorzugsweise als einen der sekundären Rohrstutzen einen dritten Rohrstutzen auf mit einem dritten Außendurchmesser und einem dritten Innendurchmesser, und als einen weiteren der sekundären Rohrstutzen einen vierten Rohrstutzen mit einem vierten Außendurchmesser und einem vierten Innendurchmesser.

Vorzugsweise weist die Verschlusseinheit eine, vorzugsweise mittels Blinddeckel, insbesondere fluiddicht, verschlossene, Einfüllöffnung zur Injektion eines Füllmaterials auf, insbesondere zur Injektion eines Schall- oder Wärmedämmmaterials.

Weiter vorzugsweise weist die Verschlusseinheit einen Flansch, vorzugsweise umlaufend, zur Anlage an dem Wandabschnitt auf, wobei vorzugsweise an dem Flansch auf einer dem Rohrstutzen der jeweils anderen Verschlusseinheit zugewandten Seite ein Dichtelement zur Abdichtung gegen den Wandabschnitt angeordnet ist.

Die Rohrstutzen sind vorzugsweise zumindest abschnittsweise konisch verjüngt ausgebildet.

Vorzugsweise weisen die Rohrstutzen jeweils auf einer dem Rohrstutzen der jeweils anderen Verschlusseinheit abgewandten Seite eine Aufnahme für ein Dichtelement zur Abdichtung gegenüber der jeweils aufzunehmenden Leitung (beispielsweise Fluidleitung oder elektrische Leitung) auf. Die Aufnahme ist vorzugsweise mittels eines Blinddeckels, insbesondere fluiddicht, verschlossen, wobei der Blinddeckel dazu eingerichtet ist, vor oder mit Einsatz des Dichtelements aus der Aufnahme entfernt zu werden. Die Blinddeckel stellen sicher, dass die Wanddurchführung nach Installation bereits fluiddicht ist, auch wenn noch keine Verlegung der Leitungen durch die Wanddurchführung hindurch stattgefunden hat.

Die Verschlusseinheit ist vorzugsweise dazu eingerichtet, mit einer Spanneinrichtung zusammenzuwirken, wobei die Spanneinrichtung vorzugsweise zum axialen Verspannen der Verschlusseinheit eingerichtet ist.

Die Erfindung betrifft in einem weiteren Aspekt ein Wärmeübertrager-System mit mehreren wärmeführenden Fluidleitungen, und einer Wärmeübertrager-Wanddurchführung zur oberirdischen Installation des Wärmeübertrager-Systems, wobei die Wanddurchführung zum Durchführen der Fluidleitung durch eine Öffnung eines Wandabschnitts eingerichtet ist. Die Erfindung löst die ihr zugrundliegende Aufgabe, indem das Wärmeübertrager-System eine Wärmeübertrager-Wanddurchführung nach einer der vorstehend beschriebenen bevorzugten Ausführungsformen des ersten Aspekts und/oder eine oder mehrere Verschlusseinheiten gemäß dem zweiten Aspekt aufweist.

Das Wärmeübertrager-System gemäß dem dritten Aspekt macht sich dieselben Vorteile zunutze wie die Wärmeübertrager-Wanddurchführung und die Verschlusseinheit der vorstehend beschriebenen Aspekte.

Bevorzugte Ausführungsformen der Wärmeübertrager-Wanddurchführung und der Verschlusseinheit sind zugleich bevorzugte Ausführungsformen des Wärmeübertrager-Systems und umgekehrt, weswegen zur Vermeidung von Wiederholungen auf die obigen Ausführungen verwiesen wird.

Die Erfindung betrifft in einem weiteren Aspekt die Verwendung von zwei Verschlusseinheiten nach einer der vorstehend beschriebenen Ausführungsformen gemäß dem zweiten Aspekt zum Bilden einer Wanddurchführung gemäß einer der vorstehend beschriebenen Ausführungsformen gemäß dem ersten Aspekt der Erfindung. Insbesondere sind dabei die Rohrstutzen an der zweiten Verschlusseinheit identisch zu den Rohrstutzen der ersten Verschlusseinheit dimensioniert, ausgerichtet und beabstandet, und/oder die erste Verschlusseinheit und die zweite Verschlusseinheit sind als identisch dimensionierte Bauteile ausgebildet. '

Aus den vorstehend beschriebenen Aspekten ergibt sich, dass die Durchführung in erster Linie als Durchführung durch Seitenwände von Gebäuden entwickelt worden ist. Sie ist aber auch geeignet, und wird in einer bevorzugten Ausführungsform auch dazu verwendet, eine Durchführung durch eine Geschoss- oder Gebäudedecke hindurch bereitzustellen.

Die Erfindung wird im Folgenden unter Bezugnahme auf die beigefügten Figuren anhand eines bevorzugten Ausführungsbeispiels näher beschrieben. Hierbei zeigen:
- Fig. 1: eine Verschlusseinheit für eine Wanddurchführung gemäß einem bevorzugten Ausführungsbeispiel in einer schematischen räumlichen Ansicht,
- Fig. 2: eine Wanddurchführung gemäß dem bevorzugten Ausführungsbeispiel in einer schematischen räumlichen Darstellung,
- Fig. 3: die Wanddurchführung gemäß Fig. 2 in einem alternativen Montagezustand,
- Fig. 4: eine Dämmung für die Wanddurchführung gemäß dem bevorzugten Ausführungsbeispiel,
- Fig. 5: eine weitere räumliche schematische Darstellung der Wanddurchführung gemäß dem Ausführungsbeispiel,
- Fig. 6: die Wanddurchführung gemäß Fig. 5 in einem alternativen Betriebszustand, und
- Fig. 7: ein Wärmeübertrager-System mit einer Wanddurchführung nach einer der Fig. 1 bis 6.

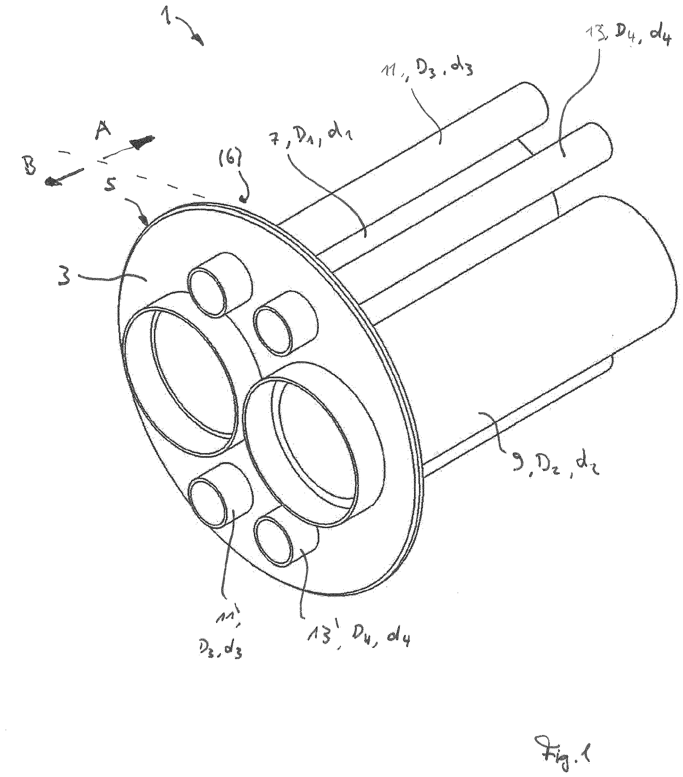

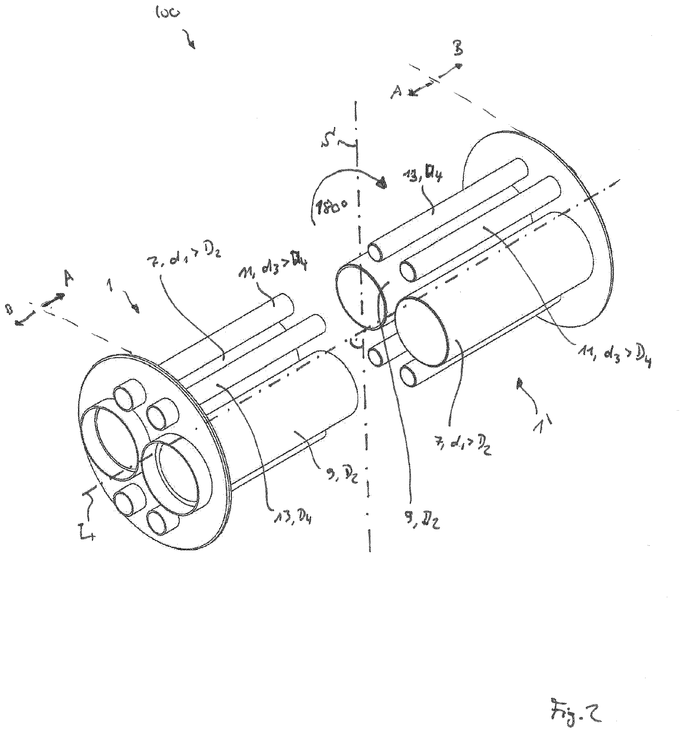

In Fig. 1 ist eine Verschlusseinheit 1 für ein Wärmeübertrager-Wanddurchführung 100 (vgl. Fig. 2) zur oberirdischen Installation eines Wärmeübertrager-Systems gezeigt. Die Verschlusseinheit 1 ist dazu eingerichtet, wärmeführende Fluidleitungen in sich aufzunehmen, um diese durch eine Wand hindurchzuführen. Zu diesem Zweck weist die Verschlusseinheit 1 eine Ankerplatte 3 auf, an der umlaufend ein Flansch 5 ausgebildet ist. Ankerplatte 3 und Flansch 5 sind dazu eingerichtet, außen an einer Anlagefläche des Wandabschnitts angelegt zu werden.

Die Verschlusseinheit 1 weist einen ersten Rohrstutzen 7 auf, der einen ersten Außendurchmesser D₁ und einen ersten Innendurchmesser d₁ besitzt. Ferner weist die Verschlusseinheit 1 einen weiteren Rohrstutzen 9 auf, der einen zweiten Außendurchmesser D₂ und einen zweiten Innendurchmesser d₂ aufweist. Die beiden Rohrstutzen 7, 9 dienen als primäre Rohrstutzen und sind dazu eingerichtet, wärmeführende Fluidleitungen in sich aufzunehmen und durchzuführen.

Die Rohrstutzen 7, 9 für die Fluidleitungen sind nicht identisch dimensioniert, sondern sind hinsichtlich ihrer Durchmesser leicht voneinander unterschiedlich: der erste Innendurchmesser d₁ des Rohrstutzens 7 ist gleich groß oder größer als der zweite Außendurchmesser D₂ des Rohrstutzend 9.

Die Rohrstutzen 7, 9 sind parallel zueinander ausgerichtet.

Die Verschlusseinheit 1 weißt zusätzlich zu den Rohrstutzen 7, 9, die als primäre Rohrstutzen dienen, ferner einen Rohrstutzen 11 mit einem dritten Außendurchmesser D₃ und einem dritten Innendurchmesser d₃ auf, sowie ein parallel dazu angeordneten Rohrstutzen 13 mit einem vierten Außendurchmesser D₄ und einem vierten Innendurchmesser d₄. Die Rohrstutzen 11, 13 dienen als sekundäre Rohrstutzen zur Aufnahme und Führung von elektrischen Leitungen, etwa Steuer- und/oder Datenleitungen. Der dritte Innendurchmesser d₃ des Rohrstutzens 11 ist gleich oder größer dem vierten Außendurchmesser D₄ des Rohrstutzens 13.

Die Rohrstutzen 11, 13 sind parallel zueinander und parallel zu den primären Rohrstutzen 7, 9 ausgerichtet.

Die Rohrstutzen 11, 13 bilden einen ersten Satz sekundärer Rohrstutzen aus, und die Verschlusseinheit 1 weist (optional) zusätzlich einen zweiten Satz sekundärer Rohrstutzen 11', 13' auf, die jeweils ebenfalls einen dritten Außendurchmesser D₃' und dritten Innendurchmesser d₃', bzw. einen vierten Außendurchmesser D₄' und vierten Innendurchmesser d₄' aufweisen.

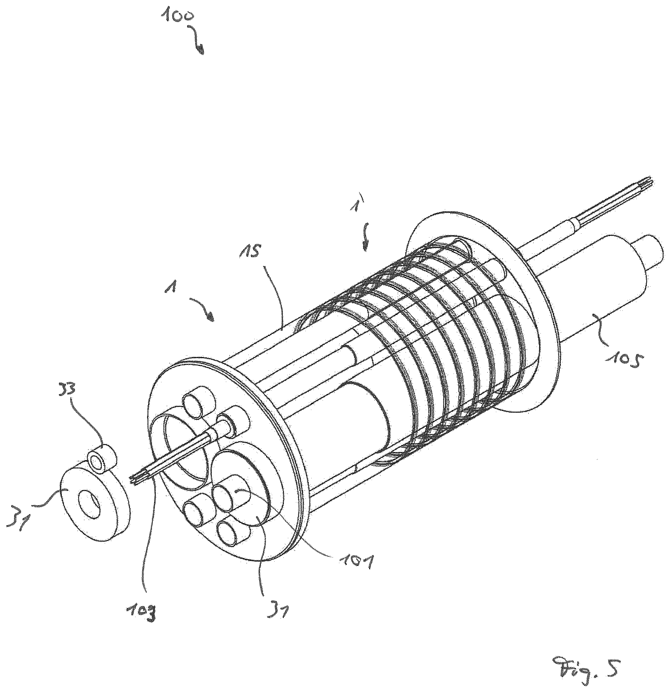

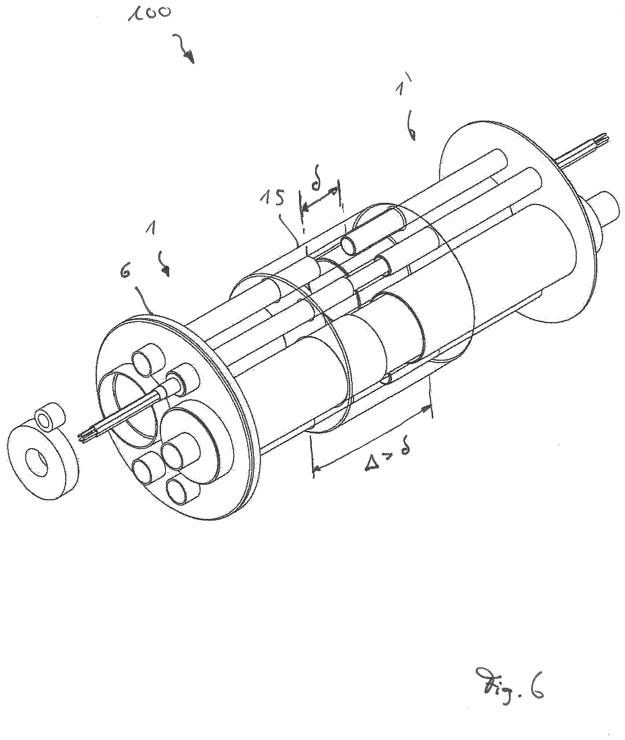

Die korrespondierende Dimensionierung der Durchmesser dient dem Ermöglichen eines Zusammensteckens zweier Verschlusseinheiten auf verschiebliche Art ineinander, wie beispielsweise in Fig. 2 dargestellt ist. Die Verschlusseinheit 1 weist für die Rohrstutzen 7, 9, 11, 13, 11', 13' einen ersten Abschnitt A auf, der dazu eingerichtet ist, in einer entsprechenden Öffnung des Wandabschnitts eingeführt zu werden. Von der Ankerplatte 3 aus erstrecken sich die Rohrstutzen 7, 9, 11, 13, 11', 13' zudem auch in entgegengesetzter Richtung in einem Abschnitt B, durch welchen die durchgeführten Fluidleitungen bzw. elektrischen Leitungen zu den jeweiligen Geräten des Wärmeübertrager-Systems weitergeführt werden können, vgl. Fig. 5, 6.

Auf der dem ersten Abschnitt A zugewandten Seite der Ankerplatte 3 kann eine Dichtung 6 angebracht werden, die bei Anlage der Ankerplatte 3 an den Wandabschnitt ihre Dichtwirkung entfaltet.

Die Wanddurchführung 100 gemäß Fig. 2 zeigt einen Aufbau, der aus zwei Verschlusseinheiten, nämlich einer ersten Verschlusseinheit 1 und einer zweiten Verschlusseinheit 1' besteht. Die zweite Verschlusseinheit 1' ist baugleich zu der ersten Verschlusseinheit 1. Die Verschlusseinheiten 1, 1' sind zueinander um eine Symmetrieachse S rotationssymmetrisch, und in Fig. 2 ist die zweite Verschlusseinheit 1' um 180° um die Symmetrieachse S relativ zur ersten Verschlusseinheit 1 gedreht angeordnet. Die primären Rohrstutzen und sekundären Rohrstutzen der Verschlusseinheiten 1,1' stehen sich wie folgt fluchtend gegeneinander gegenüber:

Der erste primäre Rohrstutzen 7 der ersten Verschlusseinheit 1 ist fluchtend auf den zweiten primären Rohrstutzen 9 der zweiten Verschlusseinheit 1' ausgerichtet. Der zweite primäre Rohrstutzen 9 der ersten Verschlusseinheit 1 ist fluchtend auf den ersten primären Rohrstutzen 7 der zweiten Verschlusseinheit 1' ausgerichtet.

Der erste sekundäre Rohrstutzen 11 der ersten Verschlusseinheit 1 ist fluchtend auf den zweiten sekundären Rohrstutzen 13 der zweiten Verschlusseinheit 1' ausgerichtet. Der zweite sekundäre Rohrstutzen 13 der ersten Verschlusseinheit 1 ist fluchtend auf den ersten sekundären Rohrstutzen 11 der zweiten Verschlusseinheit 1' ausgerichtet. Das Gleiche gilt für die in Fig. 2 nicht gesondert hervorgehobenen sekundären Rohrstutzen 11', 13' der ersten und zweiten Verschlusseinheit 1, 1'.

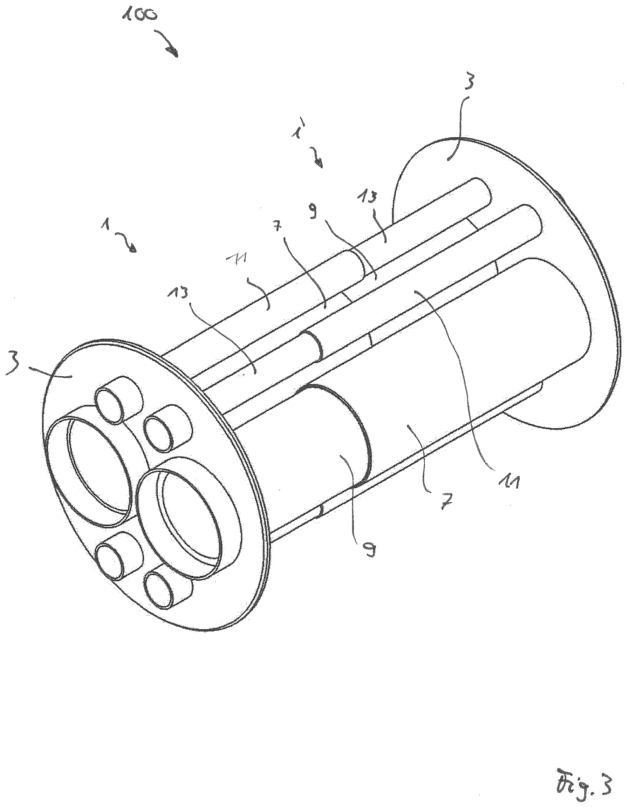

Die vorstehend anhand von Fig. 1 beschriebene Dimensionierung der Außendurchmesser und Innendurchmesser der Verschlusseinheiten 1, 1' ermöglicht es nun, die Verschlusseinheiten 1, 1' ineinander zu verschieben, was in Fig. 3 dargestellt ist. Dadurch, dass die jeweils äußeren zweiten und vierten Durchmesser D₂, D₄ kleiner sind als die ihnen fluchtend gegenüberliegenden ersten und dritten Innendurchmesser d₁, d₃, lassen sich die Rohrstutzen in der gezeigten Art und Weise ineinanderschieben und bilden im zusammengesteckten Zustand einen von einer Ankerplatte 3 der ersten Verschlusseinheit 1 bis zur Ankerplatte 3 der zweiten Verschlusseinheit 1' durchgehenden Kanal für die darin aufzunehmenden Leitungen aus.

Es genügt ein einziges Formgebungswerkzeug, beispielsweise ein Spritzgusswerkzeug, um beide Verschlusseinheiten 1, 1' bereitzustellen. Ein Monteur muss am Ort der Installation des Wärmebetreiber-Systems nicht aus mehreren verschiedenen Bauteilen auswählen und es besteht kein Risiko, durch Auswahl falscher Bauteile eine Installation nicht vornehmen zu können. Es muss lediglich eine ausreichende Stückzahl an Verschlusseinheiten 1, 1' vorgehalten werden.

Die unterschiedliche Dimensionierung der Rohrstutzen 7 bis 13 lässt nur eine einzige relative Ausrichtung der Verschlusseinheiten 1, 1' zueinander zu, in der ein Einstecken ermöglicht ist, was weiterhin das Risiko einer Fehlmontage minimiert. Die Montage gelingt einfach und in kurzer Zeit.

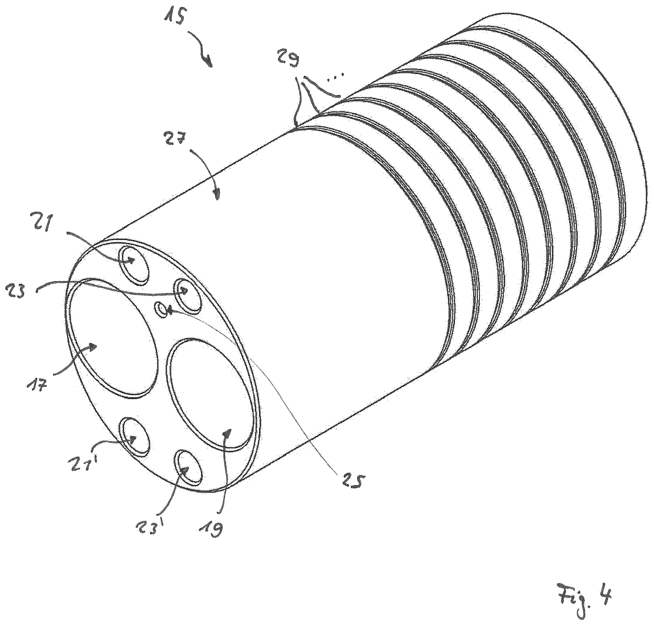

Die Wanddurchführung 100 kann durch zusätzliches Anbringen einer Dämmung 15 weiter optimiert werden. In Fig. 4 ist exemplarisch eine aus einem einteiligen Formkörper gebildete Dämmung 15 dargestellt. Die Dämmung 15 weist eine Ausnehmung 17 für den primären Rohrstutzen 7 auf, sowie eine Ausnehmung 19 für den zweiten primären Rohrstutzen 9. Vorzugsweise weist Ausnehmung 19 denselben Durchmesser wie die Ausnehmung 17 auf.

Ferner weist die Dämmung 15 eine Ausnehmung 21 für einen ersten sekundären Rohrstutzen 11 auf, und einen parallel dazu ausgerichtete weitere Ausnehmung 23 für den zweiten sekundären Rohrstutzen 13. Vorzugsweise weist Ausnehmung 21 denselben Durchmesser wie die Ausnehmung 23 auf.

Optional kann die Dämmung 15, wie auch die Verschlusseinheit 1 gemäß Fig. 1, als zweiten Satz sekundärer Rohrstutzen entsprechend eine Ausnehmung 21' zur Aufnahme des Rohrstutzens 11' und eine Ausnehmung 23' zur Aufnahme des Rohrstutzens 13' aufweisen. Vorzugsweise weist Ausnehmung 21' denselben Durchmesser wie die Ausnehmung 23' auf.

Die Dämmung 15 kann ferner eine Durchgangsöffnung 25 zum Durchleiten von Aufschäumendem und/oder aushärtendem Füllmaterial zum weiteren Verfüllen etwaig freibleibender Abschnitte der die Wand durchdringenden Öffnung aufweisen, oder zum Einführen einer Einführhilfe zum Positionieren der Verschlusseinheiten 1, 1' in der Wand.

Die Dämmung 15 weist eine äußere Umfangsfläche 27 auf, an der (nicht gezeigt) eine Längenskala angebracht werden kann, oder eine Anzahl von Solltrennstellen 29 zum vereinfachten Anpassen der Länge der Dämmung 15 an die Dicke des Wandabschnitts, durch den die Leitungen hindurchgeführt werden müssen.

Fig. 5 zeigt exemplarisch die Wanddurchführung 100 gemäß in Fig. 2 und 3 mit der Dämmung 15 gemäß Fig. 4 im montierten Zustand. Zweckmäßigerweise wird die Dämmung 15 entweder auf eine der Verschlusseinheiten 1, 1' aufgefädelt, bevor die beiden Bauteile zusammen in die Öffnung des Wandabschnitts eingeführt werden, oder die Dämmung 15 wird zuerst in den Wandabschnitt eingeführt, und im Anschluss daran werden die beiden Verschlusseinheiten 1, 1' von der jeweiligen Seite des Wandabschnitts ineinandergeschoben.

Nach der Installation der Verschlusseinheiten 1, 1' können eine oder mehrere Fluidleitungen 101 in einfache Weise durch die Wanddurchführung hindurchgeführt werden und mittels passender Dichtelemente 31 endseitig relativ zu der Verschlusseinheit 1, 1' abgedichtet werden. Optional können außenseitig ferner außerhalb des Wandabschnitts zusätzliche Isolationsmittel 105 um die Fluidleitung 101 herumgelegt werden.

In prinzipiell gleicher Weise können ein oder mehrere elektrische Leitungen 103, bspw. Steuer- und/oder Datenleitungen in die Aufnahmen für die sekundären Rohrstutzen eingeführt werden und ebenfalls mit angepassten Dichtelementen 33 relativ zu den Verschlusseinheiten 1, 1' abgedichtet werden.

Die Fig. 1 bis 5 zeigen jeweils eine Installation, bei welcher der Wandabschnitt eine Dicke aufweist, die es erlaubt, die beiden Verschlusseinheiten 1, 1' unmittelbar ineinander zu schieben. Dank der zusätzlichen Verwendung einer Dämmung 15, wie in Fig. 6 gezeigt, ist es aber auch möglich, Wandabschnitte mit höheren Wandstärken noch erfolgreich zu durchdringen. Die Dämmung 15 weist in Richtung der Rohrstutzen eine Länge Δ auf, und ermöglicht es damit, dass die Rohrstutzen nicht ineinandergeschoben werden müssen, sondern, dass die Verschlusseinheiten 1, 1' nur soweit einander angenähert werden müssen, dass zwischen ihnen ein Spalt δ verbleibt, der kleiner sein muss als die Länge Δ der Dämmung 15. Der im Wandabschnitt verbleibende Freiraum links und rechts der Dämmung 15 kann durch Injektion eines entsprechend geeigneten Füllmaterials nach Installation der Wanddurchführung 100 verfüllt werden.

Selbst bei Verwendung einer mittels Formkörper ausgebildeten Dämmung 15,kann die Wanddurchführung mit minimaler Teilekomplexität und einem hohen Gleichteileanteil auf dennoch kostengünstige Weise erreicht werden.

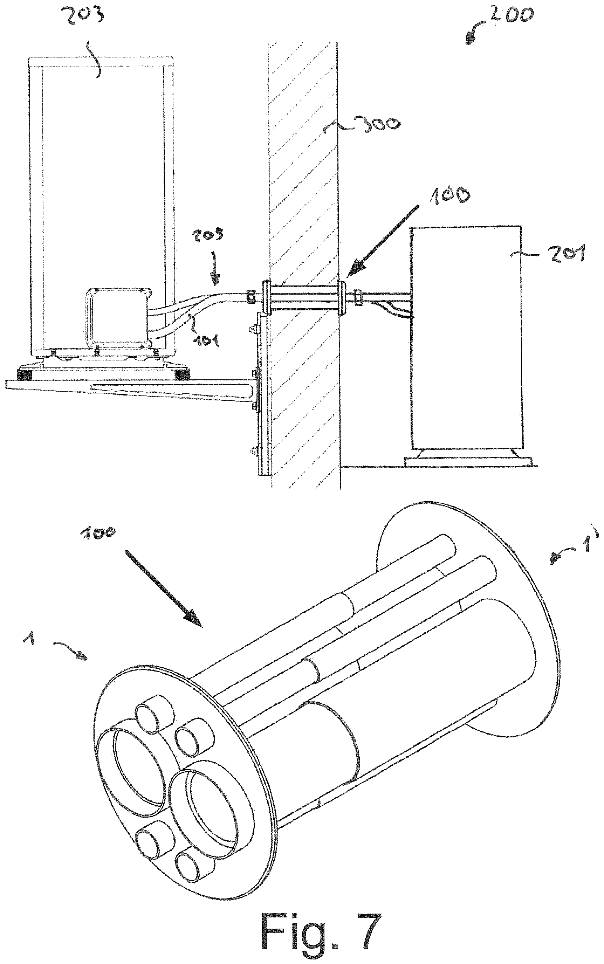

In Fig. 7 ist ein Wärmeübertrager-System 200 gezeigt. Das Wärmeübertrager-System 200 weist ein Innengerät 201, ein Außengerät 203 und eine Wanddurchführung 100 gemäß den Fig. 1 bis 6 auf. Das Innengerät 201 ist mit dem Außengerät mittels einer Leitungsanordnung 205 verbunden, welche sich durch die Wanddurchführung 100 hindurch erstreckt. Die Leitungsanordnung 205 umfasst eine Mehrzahl von Fluidleitungen 101 und (optional) eine oder mehrere elektrische Leitungen (nicht gezeigt, vgl. Fig. 5), die jeweils abgedichtet in der Wanddurchführung 100 aufgenommen sind. Die Wanddurchführung 100 ist ihrerseits fluiddicht an einem Wandabschnitt 300 angeordnet, durch welchen die Leitungsanordnung 205 sich hindurch erstreckt.

### Bezugszeichenliste:

- 1, 1': Verschlusseinheit
- 3: Ankerplatte
- 5: Flansch
- 6: Dichtung
- 7: 1. Rohrstutzen (primär)
- 9: 2. Rohrstutzen (primär)
- 11, 11': Rohrstutzen (sekundär)
- 13, 13': Rohrstutzen (sekundär)
- 15: Dämmung
- 17, 19, 21, 23: Ausnehmung
- 21', 23': Ausnehmung
- 25: Durchgangsöffnung
- 27: Umfangsfläche
- 29: Solltrennstelle
- 31,33: Dichtelement
- 100: Wärmeübertrager-Wanddurchführung
- 101: Fluidleitung
- 103: elektrische Leitung
- 105: Isolationsmittel
- 200: Wärmeübertrager-System
- 201: Innengerät
- 203: Außengerät
- 205: Leitungsanordnung
- 300: Wandabschnitt
- A, B: Abschnitt
- S: Symmetrieachse
- Δ: Länge
- δ: Spalt
- D₁, D₁': 1. Außendurchmesser
- d₁, d₁': 1. Innendurchmesser
- D₂, D₂': 2. Außendurchmesser
- d₂, d₂': 2. Innendurchmesser
- D₃, D₃': 3. Außendurchmesser
- d₃, d₃': 3. Innendurchmesser
- D₄, D₄': 4. Außendurchmesser
- d₄, d₄': 4. Innendurchmesser

## Patentansprüche

1. Wärmeübertrager-Wanddurchführung (100) zur oberirdischen Installation eines Wärmeübertrager-Systems mit mehreren wärmeführenden Fluidleitungen (101), wobei die Wanddurchführung (100) zum Durchführen der Fluidleitungen (101) durch eine Öffnung eines Wandabschnitts eingerichtet ist,
**dadurch gekennzeichnet, dass** die Wanddurchführung (100) aufweist:
- eine Verschlusseinheit (1), die zur Anlage an dem Wandabschnitt eingerichtet ist, und mehrere in die Öffnung einführbare Rohrstutzen (7,9) zur Aufnahme der Fluidleitungen aufweist,
- eine Positioniereinheit (1'), die zur Anlage an oder in dem Wandabschnitt, der ersten Verschlusseinheit (1) gegenüber, eingerichtet ist, und mehrere in die Öffnung einführbare Rohrstutzen (7,9) zur Aufnahme der Fluidleitungen aufweist,
wobei die Rohrstutzen (7,9) dazu eingerichtet sind, verschieblich miteinander zusammengesteckt zu werden.

2. Wanddurchführung (100) nach Anspruch 1,
**dadurch gekennzeichnet, dass** die Verschlusseinheit (1) eine erste Verschlusseinheit ist, und die Positioniereinheit (1') eine zweite Verschlusseinheit ist, wobei die Rohrstutzen der ersten und zweiten Verschlusseinheit dazu eingerichtet sind, verschieblich mit den Rohrstutzen der jeweils anderen Verschlusseinheit zusammengesteckt zu werden.

3. Wanddurchführung nach Anspruch 1 oder 2,
wobei die (erste) Verschlusseinheit (1) einen ersten Rohrstutzen (7) mit einem ersten Außendurchmesser (D₁) und einem ersten Innendurchmesser (d₁) aufweist, und einen zweiten Rohrstutzen (9) mit einem zweiten Außendurchmesser (D₂) und einem zweiten Innendurchmesser (d₂), wobei der erste Innendurchmesser (d₁) größer oder gleich dem zweiten Außendurchmesser (D₂) ist.

4. Wanddurchführung (100) nach einem der vorstehenden Ansprüche,
wobei die Wanddurchführung (100) ferner zum Durchführen einer oder mehrerer elektrischer Leitungen (103) durch die Öffnung des Wandabschnitts eingerichtet ist, wobei
die Rohrstutzen (7,9) zur Aufnahme der Fluidleitungen (101) primäre Rohrstutzen sind, und die ersten und zweiten Verschlusseinheiten (1,1') jeweils einen oder mehrere in die Öffnung einführbare sekundäre Rohrstutzen (11,13,11`,13`) zur Aufnahme der elektrischen Leitungen (103) aufweisen, und wobei die sekundären Rohrstutzen (11,13,11',13') der ersten und zweiten Verschlusseinheit (1,1') dazu eingerichtet sind, mit den sekundären Rohrstutzen (13,11,13',11') der jeweils anderen Verschlusseinheit (1',1) verschieblich zusammengesteckt zu werden.

5. Wanddurchführung (100) nach Anspruch 4,
wobei die erste Verschlusseinheit (1) als einen der sekundären Rohrstutzen (11,13,11',13') einen Rohrstutzen (11,11') mit einem dritten Außendurchmesser (D₃) und einem dritten Innendurchmesser (d₃) aufweist, und als einen weiteren der sekundären Rohrstutzen (11,13,11`,13`) einen Rohrstutzen (13,13`) mit einem vierten Außendurchmesser (D₄) und einem vierten Innendurchmesser (d₄) aufweist, wobei der dritte Innendurchmesser (d₃) größer oder gleich dem vierten Außendurchmesser (D₄) ist.

6. Wanddurchführung (100) nach einem der Ansprüche 3 bis 5,
**dadurch gekennzeichnet, dass** die Rohrstutzen (7,9,11,13,11`,13`) an der zweiten Verschlusseinheit (1') identisch zu den Rohrstutzen (7,9,11,13,11`,13`) der ersten Verschlusseinheit (1) dimensioniert, ausgerichtet und beabstandet sind, und/oder die erste Verschlusseinheit (1) und die zweite Verschlusseinheit (1') als identisch dimensionierte Bauteile ausgebildet sind.

7. Wanddurchführung nach einem der vorstehenden Ansprüche,
**dadurch gekennzeichnet, dass** die Rohrstutzen fluiddicht aneinander anliegen, wobei vorzugsweise an den Verschlusseinheiten Anschlussschnittstellen für korrespondierende Leitungsverbinder vorgesehen sind.

8. Wanddurchführung (100) nach einem der vorstehenden Ansprüche, **dadurch gekennzeichnet, dass** die Wanddurchführung (100) eine aus einem oder mehreren Formteilen ausgebildete Dämmung (15) aufweist, die dazu eingerichtet ist, zwischen den Verschlusseinheiten (1,1') positioniert zu werden, wobei die Dämmung (15), der Dimensionierung, Ausrichtung, Beabstandung und Anzahl der Rohrstutzen (7,9,11,13,11`,13`) entsprechend, Ausnehmungen (17,19,21,23,21`,23`) für die Rohrstutzen (7,9,11,13,11',13') aufweist.

9. Wanddurchführung (100) nach Anspruch 8,
**dadurch gekennzeichnet, dass** die Dämmung (15) eine Umfangsfläche (27) mit einer Längenskala und/oder mehreren Solltrennstellen (29) aufweist.

10. Wanddurchführung (100) nach einem der vorstehenden Ansprüche, **dadurch gekennzeichnet, dass** die erste und/oder zweite Verschlusseinheit (1,1') einen Flansch (5), vorzugsweise umlaufend, zur Anlage an dem Wandabschnitt aufweist.

11. Wanddurchführung (100) nach Anspruch 10,
**dadurch gekennzeichnet, dass** an dem Flansch (5) auf einer den Rohrstutzen (7,9,11,13,11',13') der jeweils anderen Verschlusseinheit (1,1') zugewandten Seite ein Dichtelement (6) zur Abdichtung gegen den Wandabschnitt angeordnet ist.

12. Wanddurchführung (100) nach einem der vorstehenden Ansprüche, **dadurch gekennzeichnet, dass** die Rohrstutzen (7,9,11,13,11',13'), vorzugsweise auf einer den Rohrstutzen der jeweils anderen Verschlusseinheit (1,1') abgewandten Seite, jeweils eine Aufnahme für ein Dichtelement (31,33) zur Abdichtung gegenüber der jeweils aufzunehmenden Leitung (101,103) aufweisen.

13. Verschlusseinheit (1,1`) für eine Wanddurchführung (100) eines Wärmeübertrager-Systems mit mehreren wärmeführenden Fluidleitungen (101), wobei die Wanddurchführung (100) zum Durchführen der Fluidleitungen (101) durch eine Öffnung eines Wandabschnitts eingerichtet ist,
**dadurch gekennzeichnet, dass** die Verschlusseinheit (1,1') zur Anlage an dem Wandabschnitt eingerichtet ist, und mehrere in die Öffnung einführbare Rohrstutzen (7,9,11,13,11',13') zur Aufnahme der Fluidleitungen (101) aufweist,
wobei die Rohrstutzen (7,9,11,13,11',13') der Verschlusseinheit (1,1') dazu eingerichtet sind, mit den Rohrstutzen (9,7,13,11,13',11') einer anderen Verschlusseinheit (1',1) verschieblich zusammengesteckt zu werden.

14. Verwendung von zwei Verschlusseinheiten (1,1') nach Anspruch 13, zum Bilden einer Wanddurchführung (100) nach einem der Ansprüche 1 bis 12.

15. Verwendung nach Anspruch 14,
wobei die Rohrstutzen (7,9,11,13,11',13') an der zweiten Verschlusseinheit (1') identisch zu den Rohrstutzen (7,9,11,13,11`,13`) der ersten Verschlusseinheit (1) dimensioniert, ausgerichtet und beabstandet sind, und/oder die erste Verschlusseinheit (1) und die zweite Verschlusseinheit (1') als identisch dimensionierte Bauteile ausgebildet sind.

16. Wärmeübertrager-System (200), mit
mehreren wärmeführenden Fluidleitungen (101), und
einer Wärmeübertrager-Wanddurchführung (100) zur oberirdischen Installation des Wärmeübertrager-Systems (200), wobei die Wanddurchführung (100) zum Durchführen der Fluidleitungen (101) durch eine Öffnung eines Wandabschnitts (300) eingerichtet ist,
**dadurch gekennzeichnet, dass** die Wanddurchführung (100) nach einem der Ansprüche 1 bis 12 ausgebildet ist, und/oder eine oder mehrere Verschlusseinheiten (1,1') nach Anspruch 13 aufweist.
